# EUROPEAN PATENT APPLICATION

(11) **EP 1 168 651 A2**
(43) Date of publication of application: **02.01.2002**
(21) Application number: 01304992.9
(22) Date of filing: 07.06.2001
(51) Int. Cl.: H04B 1/66

(54) **Optimising audio coding through re-encoding**

(30) Priority: 30.06.2000 JP 2000198531
(71) Applicant: Hitachi Ltd., Tokyo (JP)
(72) Inventor: Gunji, Hiroshi, c/o Hitachi Ltd, Int. Prop Office, Chiyoda-ku, Tokyo (JP); Sakamoto, Yoshiki, c/o Hitachi Ltd, Int. Prop Off, Chiyoda-ku, Tokyo (JP)
(74) Representative: Calderbank, Thomas Roger

(57) **Abstract**

In a digital audio system, a first audio unit has its audio decoder adapted to decode coded digital audio data to get coding parameters including information of frame borders of the audio data and release the decoded digital audio data and coding parameters. A second audio unit which receives the digital audio data and coding parameters has its audio encoder adapted to re-encode the digital audio data by using the coding parameters. The re-encoding process by use of the best or highly optimized coding parameters, which have been used for original coding, restores the same state of audio data, and the reduction of coding errors can be expected.

## Description

The present invention relates to an encoding and decoding technique of digital audio data, e.g., a technique for once decoding coded digital audio data and thereafter copying and re-encoding the audio data, and to a technique which is useful for the alleviation of the decay of sound quality of a digital audio system which is based on audio encoding and useful for the digital radio receiver and audio data delivery service.

With the progress of the digital audio technology and the associated data encoding technique, the occasion of digital audio data recording and reproduction by encoding the audio data is increasing. Among the digital audio data encoding schemes, the MPEG audio (Moving Picture Expert Group, Audio Part) is adopted widely partly because its standard is open to the public. Using the audio data encoding technique enables the reduction of the memory capacity for storing audio data. The MPEG audio includes layer-1, layer-2 and layer-3, and recently, portable digital audio systems which reproduce audio data by using the encoding scheme of layer-3 (also called MP3) have been put on the market.

Digital audio systems which adopt the MPEG audio operate to store audio data which is coded based on the MPEG audio (i.e., MPEG audio data) in the internal memory, and decode the data with the MPEG audio decoder on a real-time basis at the time of audio reproduction. The decoder can be a special hardware-based device, or in many case, it is designed in the form of program so as to deal with the alteration of the standard of decoding. The decoded audio data is converted into an analog signal and fed to a headphone or the like, or released intact in the form of digital data. MPEG audio data to be stored in the memory is downloaded from a downloading audio terminal unit for delivering audio data which is coded based on the MPEG audio, or, in case the system has the recording function, it is encoded with an MPEG audio encoder which deals with input non-compressed audio data.

Duplication of audio data with these digital audio systems take place as follows for example. A first digital audio unit reads output from its memory and decodes the MPEG audio data with the MPEG audio decoder and transfers the resulting non-compressed audio data to a second digital audio unit. The second digital audio unit encodes the received audio data based on the MPEG audio and stores the resulting MPEG audio data in its memory. Duplication of MPEG audio data by direct transfer from the memory of the first digital audio unit to the memory of the second digital audio unit is generally prohibited by the copyright protection law.

In case the copyright information is treated in the form of electronic watermark (signature), the first digital audio unit once decodes the MPEG audio data in the memory with the MPEG audio decoder and encodes the electronic signature information with the encoder onto the decoded audio data. The second digital audio unit decodes the electronic signature information included in the input audio data with the signature decoder thereby to confirm the permission of re-encoding based on the electronic signature information, and then encodes the MPEG audio data with the MPEG audio encoder and stores in the memory.

In the case of altering the electronic signature information within one digital audio unit, it once decodes the MPEG audio data in the memory with the MPEG audio decoder, and further decodes the electronic signature information included in the audio data with the signature decoder. Following the intended alteration of the decoded electronic signature information, e.g., up-counting of the number of times of copying, the signature encoder appends the electronic signature information to the audio data, and the MPEG audio encoder encodes the audio data and stores the resulting MPEG audio data in the memory.

The encoding process based on the MPEG audio first segments the input audio data into frames of a certain length, implements the sub-band encoding for each frame of audio data, determines the bit allotment information for each sub-band in accordance with a psychological audition model, quantizes each sub-band frame data in accordance with the bit allotment information to form sub-band waveform data, and encodes the waveform data. Coding parameters including the bit allotment information, which determine the sound quality of the coded MPEG audio data, are different in algorithm of determination depending on individual encoders, and therefore encoding the same audio data with different encoders will not necessarily result in the same coding parameters. Determination of coding parameters necessitates a huge computation volume, and some encoders designed to have a reduced computation volume may not be capable of computing the optimal coding parameters.

Therefore, when the above-mentioned decoding-encoding process based on the MPEG audio is performed, the coding parameters determined by the encoder on the part of the recording unit do not coincide with the coding parameters of the original MPEG audio data in many cases. In consequence, coding errors will arise afterward, giving rise to a problem of deteriorated re-encoded sound quality. Particularly, the inventors of the present invention have revealed that if the frame borders at re-encoding vary from those of original encoding, the encoding result changes significantly to aggravate the degraded sound quality.

Since the sound quality is mostly determined by the algorithm of encoding, when MPEG audio data is down-loaded from a down-loading audio terminal unit, it is coded based on the optimal adjustment of coding parameters by the supplier of MPEG audio data in many cases for the sake of the higher sound quality. Whereas, real-time encoders equipped in usual audio units, do not reach that optimized coding parameters due to the limited circuit scale or processing ability. On this account, when audio data down-loaded from a downloading terminal is subjected to the decoding and re-encoding processes, the sound quality is deteriorated significantly. The encoding process necessitates a huge computation volume for the determination of coding parameters as compared with the decoding process, and there emerges another problem of a degraded processing speed in the case of implementing the decoding and re-encoding processes within the same unit.

The inventors of the present invention have searched for prior arts after the completion of the invention, and found the following publications. Japanese Patent Unexamined Publications Nos. Hei 4(1992)-230184 and Hei 4(1992)-358482 describe techniques of the dubbing process of VTR, in which control information indicative of encoding/decoding being processed or not is released together with the image information signal, and, in the case of "processed", a factor signal indicative of the factor used at the process is released, and the image information signal is dubbed by encoding it by use of the factor signal.

Japanese Patent Unexamined Publication No. Hei 8(1996)-168040 describes a technique of the dubbing of reproduced video and audio signals, in which information on the quantization for code compression is released together with the reproduced signals, and the quantization information is used at the quantizing process for code compression by the recording unit.

However, these prior art publications do not mention the alleviation or prevention of the decay of sound quality at copying coded audio data through the decoding and encoding processes.

An object of the present invention is to provide a digital audio system which is capable of alleviating the decay of sound quality at the decoding and re-encoding processes of coded digital audio data, and also capable of reducing the computation process for re-encoding.

These and other objects and novel features of the present invention will become apparent from the following description taken in conjunction with the accompanying drawings.

Among the affairs of the present invention disclosed in this specification, representatives are briefed as follows.

(1) A digital audio unit has its audio decoder adapted to get coding parameters, which includes at least information of frame borders of coded digital audio data, at the decoding of the audio data and release the decoded digital audio data and coding parameters. A receiving digital audio unit which receives the released digital audio data and coding parameters has its audio encoder adapted to use the coding parameters at the re-encoding of the digital audio data. Consequently, by decoding the coded digital audio data and next re-encoding it, a copy of the coded digital audio data is produced in an indirect manner. The re-encoding process uses the same coding parameters as those used at the coding of the original coded digital audio data, and therefore the alleviation of the decay of sound quality due to re-encoding can be expected. Specifically, re-encoding by use of the coding parameters which have been provided for the original coding reduces coding errors, thereby alleviating the decay of sound quality. Particularly, encoding at the same positions of frame partition as those of original coding readily achieves the same result of high-grade or highly optimized coding, and the reduction of coding errors can be expected.

In case the original audio data has been coded by being highly optimized, re-encoding by use of the obtained coding parameters is effective significantly since it is difficult for the real-time encoder equipped in the audio unit to carry out the optimization at the same level due to its limited processing ability. In case, as in the case of MPEG audio, the coded digital audio data is formed based on sub-band encoding for the audio data which is segmented into frames of a certain length, determination of bit allotment information for each sub-band in accordance with a psychological audition model, quantization of each sub-band in accordance with the bit allotment information thereby to form the sub-band waveform data, it is possible by having the bit allotment information included in the coding parameters to use at the time of re-encoding the same coding parameters as the original ones without the need of having the same bit allotting algorithm as of the time of coding, and, in addition, it is possible to eliminate the computation for obtaining the coding parameters. Since determination of coding parameters takes up a large part of the encoding process, the elimination of this process achieves the reduction of computation volume. At the time of re-encoding, the computation for obtaining coding parameters is not needed, and consequently the reduction of computation volume at re-encoding and the speed-up of re-encoding process can be accomplished.

The audio system may include a multiplexing circuit so that the coding parameters are multiplexed to the digital audio data released by the audio decoder and the multiplexed signal is released. The audio encoder of the receiving unit is provided at its front stage with a detecting circuit which extracts the coding parameters, which are supplied by being multiplexed with the digital audio data, and feeds it to the audio encoder. Consequently, the audio data interface terminals can be used, instead of needing special terminals, for transferring the coding parameters between the units of the digital audio system.

For the convenience of the management of copyright matter, the audio system may include a signature encoder which appends the electronic signature information to the digital audio data released by the audio decoder. The receiving unit is provided at the front stage of the audio encoder with a signature decoder which extracts the electronic signature information from the received audio data. Consequently, it is possible to re-encode audio data upon confirming the permission indicate by the electronic signature information.

(2) A digital audio unit is designed to alter the electronic signature information within it. The unit includes an audio decoder which decodes coded digital audio data, which has been coded by being segmented into frames, a signature decoder which extracts electronic signature information appended to the digital audio data released by the audio decoder, a data processing circuit which alters the extracted electronic signature information, a signature encoder which appends the altered electronic signature information to the digital audio data, and an audio encoder which encodes the digital audio data received via the signature encoder. The audio decoder decodes the coded digital audio data and also releases coding parameters including at least information indicative of positions of frame partition of the digital audio data. The audio encoder encodes the digital audio data by using the coding parameters released by the audio decoder.
Consequently, the decay of sound quality can be prevented or alleviated even in the case of altering or appending the electronic signature information within the digital audio unit.

### IN THE DRAWINGS:

Fig. 1 is a block diagram showing a first example of the inventive digital audio system which is configured to have the ability of re-encoding;
Fig. 2 is a diagram showing conceptually the former part of the encoding process by the encoding scheme of MPEG layer-2 based on the MPEG audio;
Fig. 3 is a diagram showing conceptually the latter part of the encoding process by the encoding scheme of MPEG layer-2 based on the MPEG audio;
Fig. 4 is a block diagram showing an example of the MPEG audio encoder;
Fig. 5 is a block diagram showing an example of the MPEG audio decoder;
Fig. 6 is a block diagram showing a second example of the inventive digital audio system which is configured to have the ability of re-encoding;
Fig. 7 is a diagram showing an example of the PCM audio data, MPEG audio data and multiplexed audio data processed by the system shown in Fig. 6;
Fig. 8 is a diagram showing another example of the PCM audio data, MPEG audio data and multiplexed audio data processed by the system shown in Fig. 6;
Fig. 9 is a block diagram showing a third example of the inventive digital audio system which is configured to have the ability of re-encoding while being adapted to deal with the copyright information based on the electronic signature;
Fig. 10 is a block diagram showing a fourth example of the inventive digital audio system which is configured to have the ability of re-encoding while being adapted to deal with the copyright information based on the electronic signature;
Fig. 11 is a block diagram showing a fourth example of the inventive digital audio system which is configured to deal with the alteration of electronic signature within the system;
Fig. 12 is a block diagram showing a variant example derived from the digital audio system of Fig. 1;
Fig. 13 is a block diagram showing another variant example derived from the digital audio system of Fig. 1;
Fig. 14 is a block diagram showing a variant example derived from the digital audio system of Fig. 6;
Fig. 15 is a block diagram showing another variant example derived from the digital audio system of Fig. 6;
Fig. 16 is a block diagram showing a variant example derived from the digital audio system of Fig. 9;
Fig. 17 is a block diagram showing another variant example derived from the digital audio system of Fig. 9;
Fig. 18 is a block diagram showing a variant example derived from the digital audio system of Fig. 10;
Fig. 19 is a block diagram showing another variant example derived from the digital audio system of Fig. 10; and
Fig. 20 is a block diagram showing a variant example derived from the digital audio system of Fig. 11.

### 1. Parallel output of coding parameters

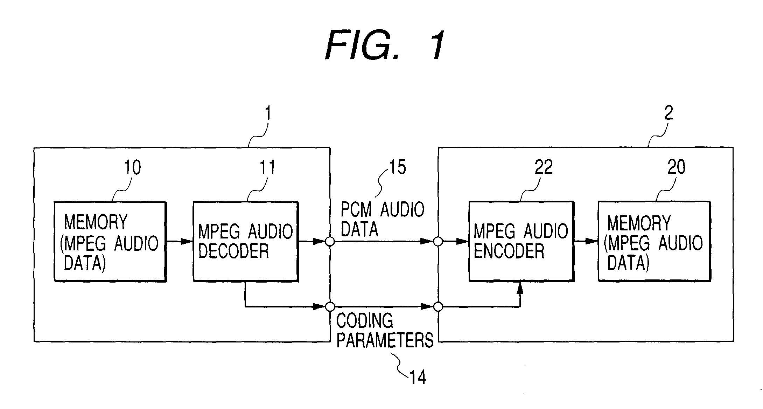

Fig. 1 shows an example of the inventive digital audio system which is configured to have the ability of re-encoding. A first digital audio unit 1 includes chiefly a memory 10 which can store MPEG audio data and an MPEG audio decoder 11. A second digital audio unit 2 includes chiefly an MPEG audio encoder 22 and a memory 20 which can store MPEG audio data.

The MPEG audio data stored in the memory 10 is decoded by the PCM audio decoder 11, and resulting digital audio data 15 in the form of PCM (pulse code modulation), for example, is released from the unit 1. In this operation, the MPEG audio decoder 11, which recognizes coding parameters used for the coding of the MPEG audio data stored in the memory 10, releases them as coding parameters 14. The coding parameters 14 include frame border information (indicative of the position of frame partition of the decoded PCM audio data) and bit allotment information.

The digital audio unit 2 receives the PCM audio data 15 and coding parameters 14, operates on the MPEG audio encoder 22 to re-encode the PCM audio data 15 by using the received coding parameters 14, and stores the encoded MPEG audio data in the memory 20.

Accordingly, the digital audio units 1 and 2 have their MPEG audio data in their memories 10 and 20 coded by the same coding parameters, and consequently, the decay of sound quality at re-encoding by the MPEG audio encoder 22 can be alleviated.

Particularly, in case the MPEG audio data in the memory 10 of the digital audio unit 1 has been down-loaded from a down-loading terminal unit by being coded with the rendition of high-grade optimization and the digital audio unit 2 re-encodes the received audio data by using coding parameters different from those for coding, the decay of sound quality is inevitable, whereas by transferring the coding parameters from the encoding unit 1 to the decoding unit 2 as shown in Fig. 1, it becomes possible for the MPEG audio encoder 22 of the digital audio unit 2 to use the same coding parameters as those used for coding by the down-loading terminal unit. In consequence, it becomes possible to prevent or alleviate the decay of sound quality particularly at re-encoding. Moreover, the MPEG audio encoder 22 of the digital audio unit 2 does not need to compute coding parameters, and the reduction of power consumption of the unit 2 can be expected.

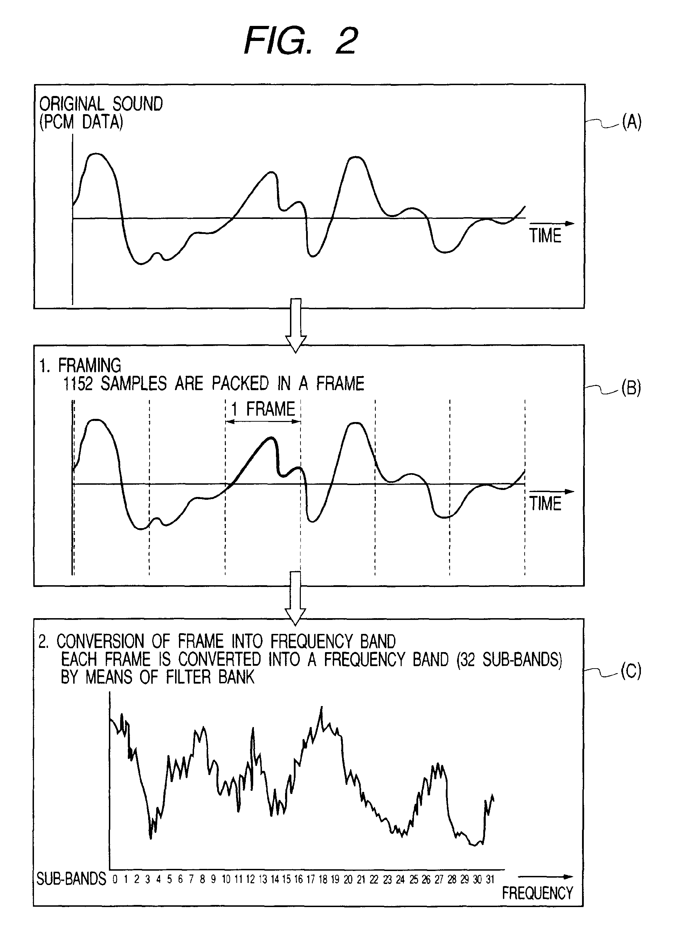

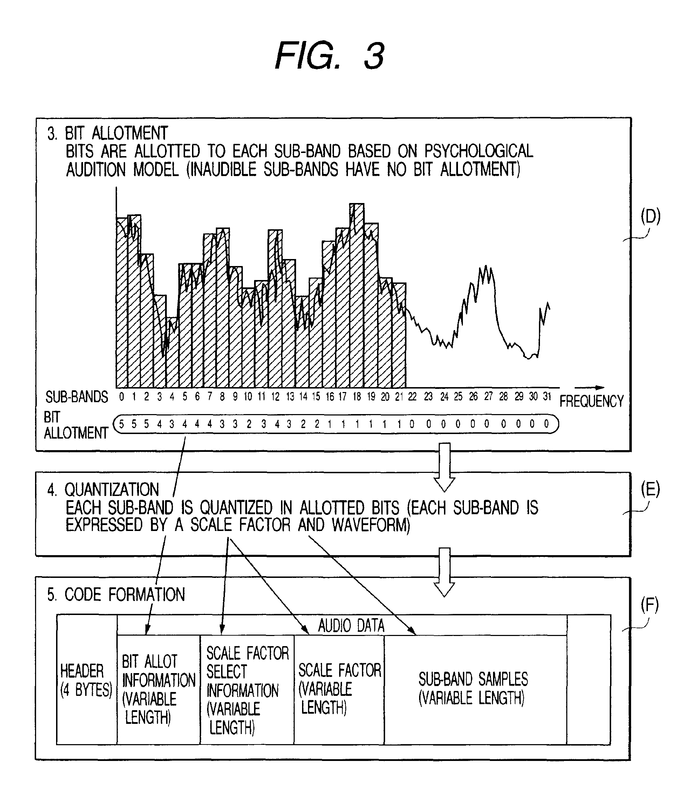

The encoding scheme of MPEG layer-2, as an example of encoding schemes based on the MPEG audio, will be explained with reference to Fig. 2 and Fig. 3. PCM audio data which is depicted as shown by (A) in Fig. 2 is segmented into frames each including 1152 samples as shown by (B), and each frame is further divided into 32 sub-bands of frequencies as shown by (C) in Fig. 2. Each sub-band is rendered the bit allotment based on a psychological audition model (adaptive bit allotment) as shown by (D) in Fig. 3.

The psychological audition model is produced by computation from the audient characteristics of human ears and sound components which are inaudible due to masking or the like in the frequency or time domain. Based on this computation, sub-bands which are completely needless in terms of audition are given no bit, and sub-bands which can be quantized coarsely without creating audible noises are given fewer bits. Bit allotment is implemented so that the decay of sound quality is minimized in terms of audition on condition that the code size of a frame does not exceed the specified number of bits (determined from the bit rate, etc.). The nature of bit allotment dominates the grade of sound quality. In the example shown by (D) in Fig. 3, sub-band #22 and the above are given no bit allotment.

The audio data converted to the sub-bands of frequency domain is quantized in the numbers of bits allotted by adaptive bit allotment as shown by (E) in Fig. 3. In the quantizing process, the data size of sub-band is evaluated in terms of a scale factor, and each sub-band is expressed by a scale factor and a normalized waveform. Specifically, multiple sample data in a sub-band are separated into a waveform which is normalized to have a peak value of 1.0 and a magnification factor, i.e., scale factor.

Finally, a code is produced from these data as shown by (F) in Fig. 3. Coded data of each frame begins with a 4-byte header. The header has its leading 12 bits fixed to logic "1", and the MPEG audio decoder decodes a coded frame which begins with the 12 bits of "1". The header further includes information on the sampling frequency of PCM digital audio and the presence or absence of CRC, by which information the byte length of a coded frame can be calculated. The header of MPEG audio data of a coded frame is followed by the bit allotment information, scale factor and sub-band waveform samples.

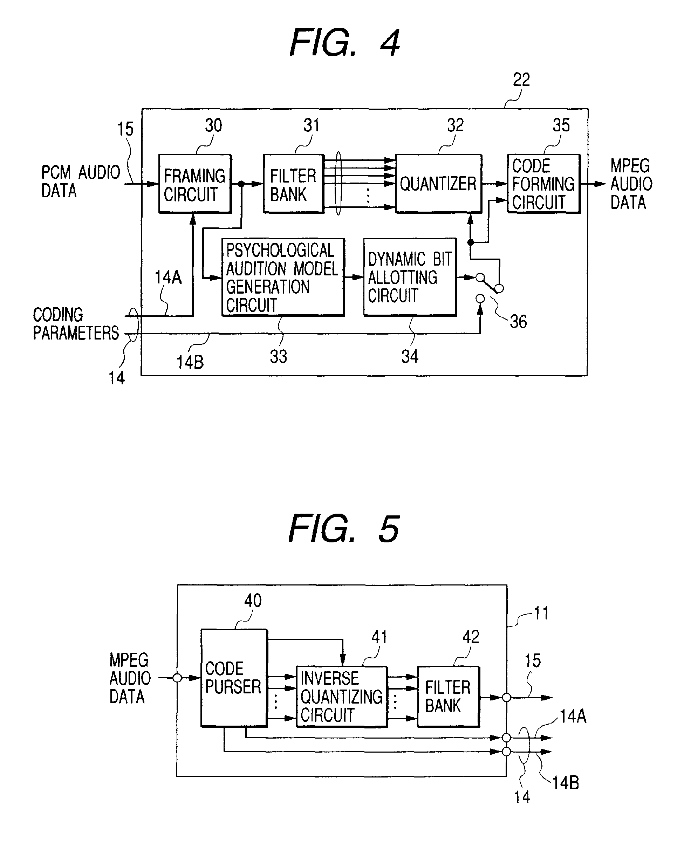

Fig. 4 shows an example of the MPEG audio encoder 22. The MPEG audio encoder 22, which is designed to carry out encoding based on the MPEG audio explained in connection with Fig. 2 and Fig. 3, includes a framing circuit 30, a filter bank 31, a quantizer 32, a psychological audition model generation circuit 33, a dynamic bit allotting circuit 34, and a code forming circuit 35.

In case the MPEG audio encoder 22 is supplied with coding parameters 14 together with PCM audio data 15, frame border information 14A included in the coding parameters 14 is given to the framing circuit 30 and bit allotment information 14B included in the coding parameters 14 is given to the quantizer 32 and code forming circuit 35 by way of a selector switch circuit 36, and the psychological audition model generation circuit 33 and dynamic bit allotting circuit 34 do not need to operate.

The input PCM audio data 15 is first segmented into frames by the framing circuit 30, and in case it has the supply of the coding parameters 14 corresponding to the PCM audio data 15, it determines frame borders by using the frame border information 14A included in the coding parameters 14. For example, it starts to make a frame of 1152 samples when the frame border information 14A which is synchronous with the input PCM audio data 15 turns to "1".

The filter bank 31, quantizer 32, code forming circuit 35, psychological audition model generation circuit 33, and dynamic bit allotting circuit 34 are identical to the conventional MPEG encoder which is designed to have no input of coding parameters 14. The framed audio data is first converted into frequency bands by the filter bank 31. The data of frequency domain is quantized by the quantizer 32, and next encoded to have the format of MPEG audio data by the code forming circuit 35.

In contrast to the conventional MPEG encoder in which the amount of bit allotment to each frequency band is determined by the dynamic bit allotting circuit 34 based on the psychological audition model provided by the psychological audition model generation circuit 33 and it is indicated to the quantizer 32, the MPEG audio encoder 22 of this embodiment shown in Fig. 4 has the bit allotment information 14B included in the coding parameters 14 and the quantizer 32 takes in the information 14B to carry out the quantization.

Accordingly, in the case of the system configuration of Fig. 1 which is designed to decode and re-encode the MPEG audio data, the psychological audition model generation circuit 33 and dynamic bit allotting circuit 34 may be absent. Otherwise, by the provision of the psychological audition model generation circuit 33 and dynamic bit allotting circuit 34 and the addition of the switch circuit 36 which switches route of bit allotment information as shown in Fig. 4, the MPEG audio encoder 22 can also perform in the conventional manner to encode the PCM audio data which does not include the coding parameters.

Fig. 5 shows an example of the MPEG audio decoder 11. It includes a code purser 40, an inverse quantizing circuit 41, and a filter bank 42. The code purser 40 receives the MPEG audio data which is formatted as shown by (F) in Fig. 3, recognizes the coding format based on the header, extracts the bit allotment information, scale factor and sub-band sample data out of each information field, and feeds them to the inverse quantizing circuit 41.

The inverse quantizing circuit 41 implements the inverse quantization of the sample data of each sub-band in accordance with the provided information, and the inverse-quantized data of frequency domain is turned back to the PCM audio data 15 by the filter bank 42. In synchronism with the output of PCM audio data, the code purser 40 releases the frame partition information 14A and bit allotment information 14B of the PCM audio data. The released frame partition information 14A and bit allotment information 14B are derived from the information extracted from the coded frame of the MPEG audio data which is fed by the purser 40 to the inverse quantizing circuit 41.

### 2. Multiplexing of coding parameters

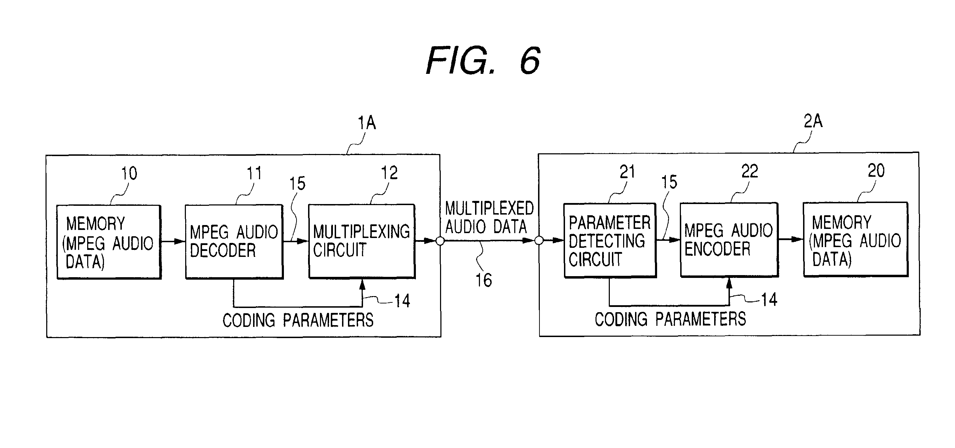

Fig. 6 shows the second example of the inventive digital audio system which is configured to have the ability of re-encoding. This system configuration differs from the preceding one shown in Fig. 1 in that the coding parameters are transferred by being multiplexed to the PCM audio data. A first digital audio unit 1A includes a multiplexing circuit 12 in addition to the memory 10 and MPEG audio decoder 11. A second digital audio unit 2A includes a parameter detecting circuit 21 in addition to the MPEG audio encoder 22 and memory 20.

The coding parameters 14 provided by the MPEG audio decoder 11 is multiplexed to part of the PCM audio data 15 by the multiplexing circuit 12, and the audio unit 1A releases multiplexed audio data 16. This multiplexing can be implemented by, for example, assigning spare bits of the PCM audio data 15 to the coding parameters 14. Alternatively, the coding parameters 14 can be appended to the PCM audio data based on the electronic signature information embedding technique.

The multiplexed audio data 16 including the coding parameter information can be transferred to the second digital audio unit 2A over the usual audio transfer path. The second digital audio unit 2A operates on its parameter detecting circuit 21 to separate the received multiplexed audio data 16 into the PCM audio data 15 and coding parameters 14, operates on its MPEG audio encoder 22 to encode the PCM audio data 15, and stores the encoded MPEG audio data in the memory 20.

Based on this system configuration also, the MPEG audio data which is stored in the memory 10 of the first digital audio unit 1A and the MPEG audio data which is once decoded and re-encoded and stored in the memory 20 of the second digital audio unit 2A are encoded based on the same coding parameters, and the decay of sound quality at recording by the second digital audio unit 2A can be alleviated as in the case of the preceding system configuration of Fig. 1. The usual PCM audio data transfer path can be used for data transfer from the first digital audio unit 1A to the second digital audio unit 2A. The MPEG audio encoder 22 of the second digital audio unit 2A does not need to compute coding parameters, and the reduction of power consumption of the unit 2A can be expected. Moreover, the coding parameters can be transacted between the digital audio units by use of their interface terminals of PCM audio data, instead of needing special terminals.

The first digital audio unit 1A of Fig. 6 can have its MPEG audio decoder 11 and multiplexing circuit 12 formed in separate LSIs (semiconductor integrated circuits), while it is also possible to unify both circuits in a special LSI. The special LSI can be either a hardware-based device or a CPU (central processing unit) or DSP (digital signal processor) having the operation program. Similarly, the second digital audio unit 2A can have its parameter detecting circuit 21 and MPEG audio encoder 22 formed in separate LSIs, while it is also possible to unify both circuits in one LSI. The LSI can be either a hardware-based device or a CPU or DSP having the operation program.

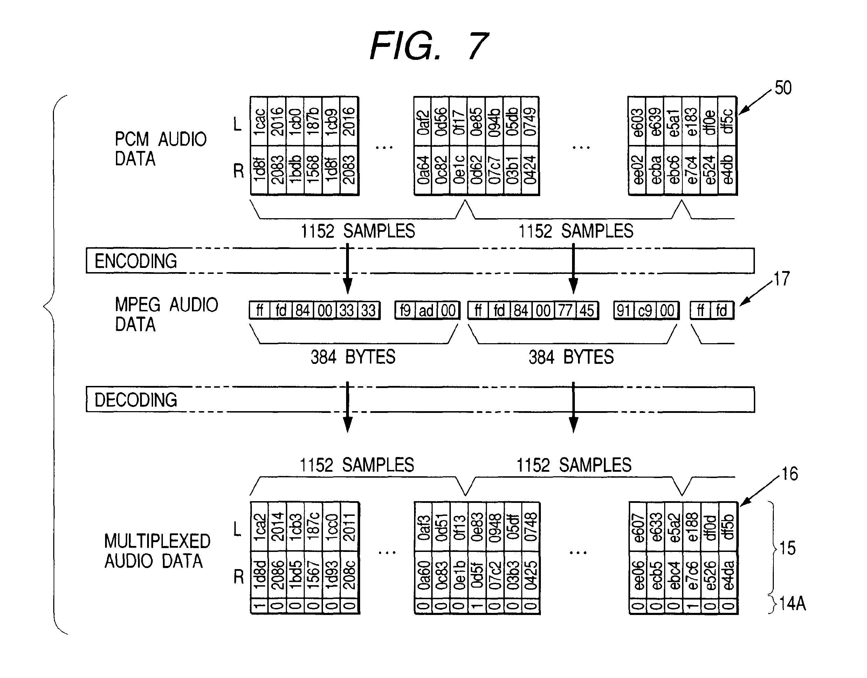

Fig. 7 shows an example of audio data processed by the digital audio system shown in Fig. 6. PCM audio data 50 is quantized in 16 bits for each of the right and left channels R and L in general. The figure shows a 16-bit datum in terms of a 4-digit hexadecimal number. In this example, the left channel has a first PCM datum of 1CAC (hex) and the right channel has a first PCM datum of 1D8F (hex).

The MPEG audio encoder segments this PCM audio data 50 into frames each including 1152 samples and encodes each frame. Coded PCM audio data 17 is also in the form of frames each having certain bytes. The example shown in Fig. 7 is MPEG audio data having a frame length of 384 bytes. The frame length is determined uniquely from the bit rate and sampling frequency of MPEG audio data. Each frame of MPEG audio data has 12 leading bits of "1", which are followed by a header including information of bit rate and sampling frequency and further followed by coded audio data.

The coded MPEG audio data 17 is stored in the memory 10 shown in Fig. 6. The MPEG audio decoder 11 operates to decode the MPEG audio data 17 to release the PCM audio data 15. Since the MPEG audio data 17 is decoded for each frame, the resulting decoded PCM audio data 15 retains the frame borders. Information of frame borders can be transferred by having one of spare bits of PCM data set to "1" for the sample datum at the frame head and "0" for the successive sample data.

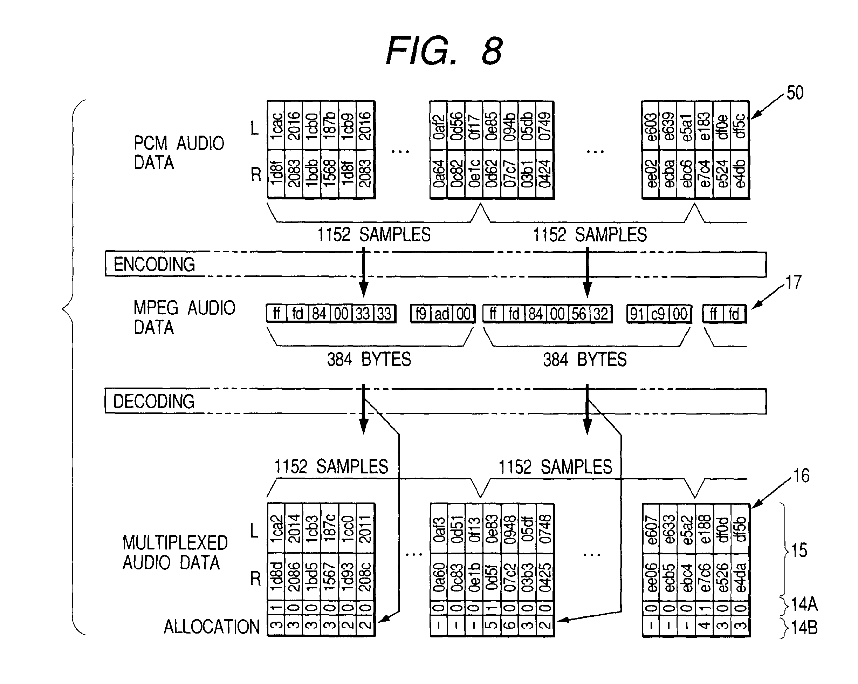

Fig. 8 shows an example of data of the case of transferring the bit allotment information 14B in addition to the frame border information 14A. The coding process for the PCM audio data 50 is identical to the case shown in Fig. 7. The MPEG audio decoder 11 decodes the MPEG audio data 17 to release the PCM audio data 15. At this time, the bit allotment information 14B, in addition to the 1-bit frame border information 14A, is also multiplexed to the PCM audio data 15 to form the multiplexed audio data 16. The bit allotment information, which indicates the amount of bit allotment to each sub-band at MPEG coding, is determined by the MPEG audio encoder by being adaptive to the PCM data of the original sound and appended to the MPEG audio data. The bit allotment information of the case of MPEG layer-2 can be expressed by 4 bits !{ }32!{ }2, and if the 4-bit bit allotment information is multiplexed to each sample as shown in Fig. 8, i.e.,64 pieces of information is multiplexed for the right and left sub-bands, the necessary bit allotment information can be multiplexed to the PCM audio data by being carried in 64 samples.

### 3. Treatment of signature information

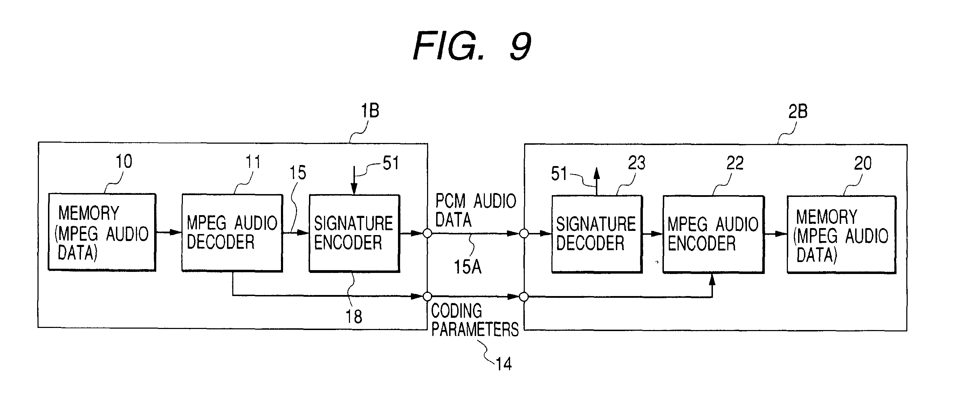

Fig. 9 shows the third example of the inventive digital audio system which is configured to have the ability of re-encoding while being adapted to deal with copyright information based on the electronic signature. This system configuration differs from the preceding one shown in Fig. 1 in that the first digital audio unit 1B includes a signature encoder 18 and the second digital audio unit 2B includes a signature decoder 23.

The signature encoder 18 has a process of embedding electronic signature information 51 in the input source information. The technique of electronic signature is to conceal some information in audio/video data. With the invisible electronic signature information being embedded and retained somewhere in an electronic publication, it is expected to protect the publication from being copied illegally. The electronic signature information to be embedded in source information can be specifically an identification (ID) number corresponding to the copyright holder, the company which holds the wholesale right of the source information, or the audio data itself. The signature encoder 18 embeds the electronic signature information 51 in the PCM audio data 15 of source information in accordance with such an algorithm that the signature information effectuates strongly and is less influential on the source information.

The MPEG audio data stored in the memory 10 of the first digital audio unit 1B is once decoded by the MPEG audio decoder 11, and the electronic signature information 51 is encoded to the decoded PCM audio data 15 by the signature encoder 18. In the second digital audio unit 2B, the signature decoder 23 separates from the PCM audio data 15A the electronic signature information 51, which is analyzed by the controller (not shown) to check the permission of re-encoding, and the MPEG audio encoder 22 encodes the PCM audio data 15A and stores the resulting MPEG audio data in the memory 20 if re-encoding is granted. The encoding process uses the coding parameters 14 which are released and transferred from the MPEG audio decoder 11 of the digital audio unit 1B as described previously. Based on the system configuration of Fig. 9, it becomes possible to determine whether the re-encoding process is to proceed depending on the analysis result of the electronic signature information.

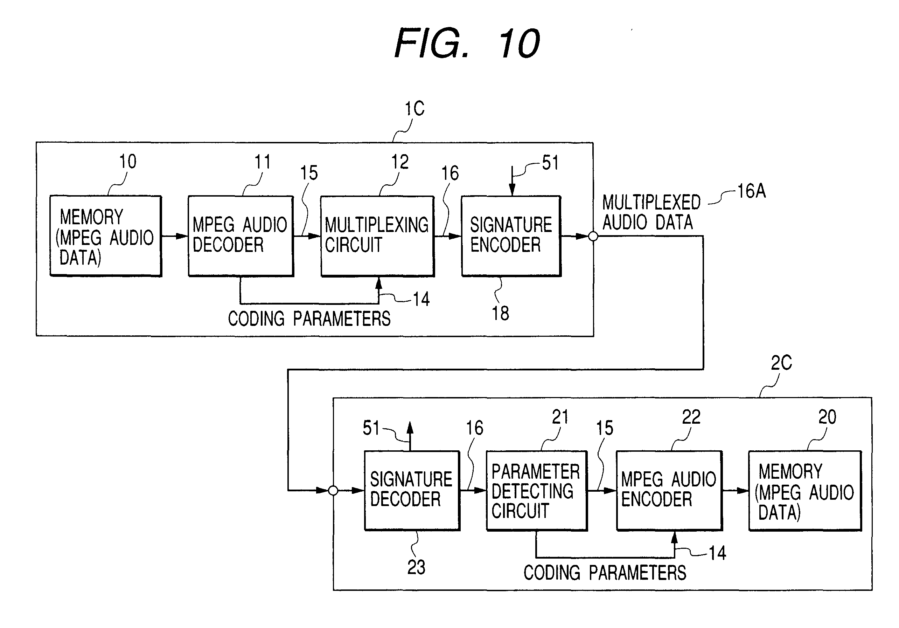

Fig. 10 shows the fourth example of the inventive digital audio system which is configured to have the ability of re-encoding while being adapted to deal with the copyright information based on the electronic signature. This system configuration differs from the preceding one shown in Fig. 6 in that the first digital audio unit 1C includes a signature encoder 18 and the second digital audio unit 2C includes a signature decoder 23.

The signature encoder 18 embeds the electronic signature information 51 in the source information which is the multiplexed audio data 16 provided by the multiplexing circuit 12, and releases the resulting multiplexed audio data 16A. The signature decoder 23 separates the multiplexed audio data 16A into the electronic signature information 51 and multiplexed audio data 16. The controller (not shown) analyzes the electronic signature information 51 to check the permission of re-encoding, and the parameter detecting circuit 21 separates the multiplexed audio data 16 into the PCM audio data 15 and coding parameters 14 if re-encoding is granted. The MPEG audio encoder 22 encodes the PCM audio data 15 and stores the resulting MPEG audio data in the memory 20. The encoding process uses the coding parameters 14 which are released by the parameter detecting circuit 21.

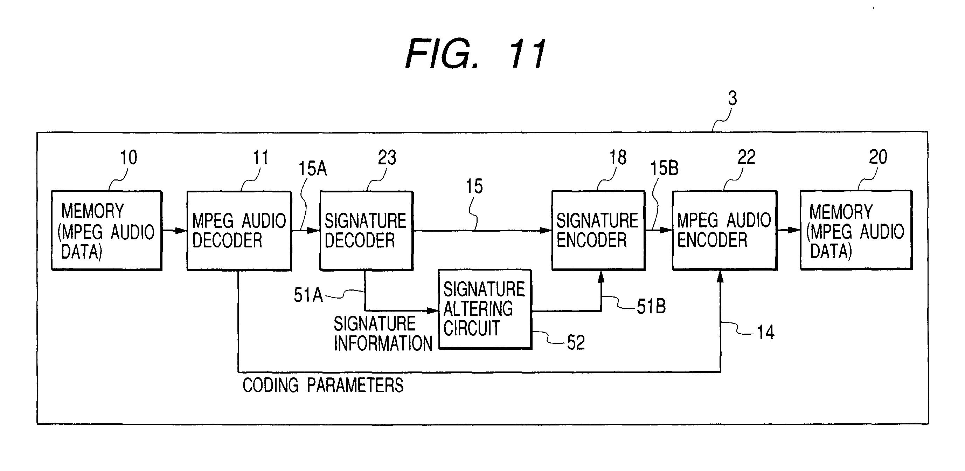

Fig. 11 shows the fifth example of the inventive digital audio system which is adapted to alter the electronic signature information within the system. The memory 10 stores coded MPEG audio data, with electronic signature information being embedded therein. The digital audio unit 3, which is adapted to alter the electronic signature information internally, includes a memory 10, an MPEG audio decoder 11, a signature decoder 23, a signature encoder 18, an MPEG audio encoder 22, a memory 20, and a signature altering circuit 52. The coding parameters 14 are fed from the MPEG audio decoder 11 to the MPEG audio encoder 22.

The MPEG audio decoder 11 reads the coded MPEG audio data, with the electronic signature information being embedded therein, out of the memory 10 to decode the data, and releases the resulting PCM audio information 15A, with the electronic signature information being embedded therein, and the coding parameters 14. The signature decoder 23 separates the audio information 15A into the PCM audio data 15 and signature information 51A. The signature altering circuit 52 alters the received electronic signature information 51A, e.g., updates the count data of copying, and releases the resulting electronic signature information 51B to the signature encoder 18.

The signature encoder 18 embeds the electronic signature information 51B in the PCM audio data 15, and the MPEG audio encoder 22 re-encodes the resulting audio data 15B to form the MPEG audio data by using the coding parameters 14 as described previously. Since the MPEG audio encoder 22 uses at re-encoding the coding parameters 14 provided by the MPEG audio decoder 11, the original MPEG audio data in the memory 10 and the re-encoded MPEG audio data inherit the same coding parameters, whereby the decay of sound quality is alleviated. The MPEG audio encoder 22 does not need the computation of coding parameters at re-encoding, and the speed-up of process and the reduction of power consumption can be expected. Based on the system configuration of Fig. 11, it becomes possible to prevent or alleviate the decay of sound quality in the case of altering or adding the electronic signature information within the digital audio unit 3.

### 4. Variant digital audio systems

Variant digital audio systems derived from the foregoing basic system configurations will be explained.

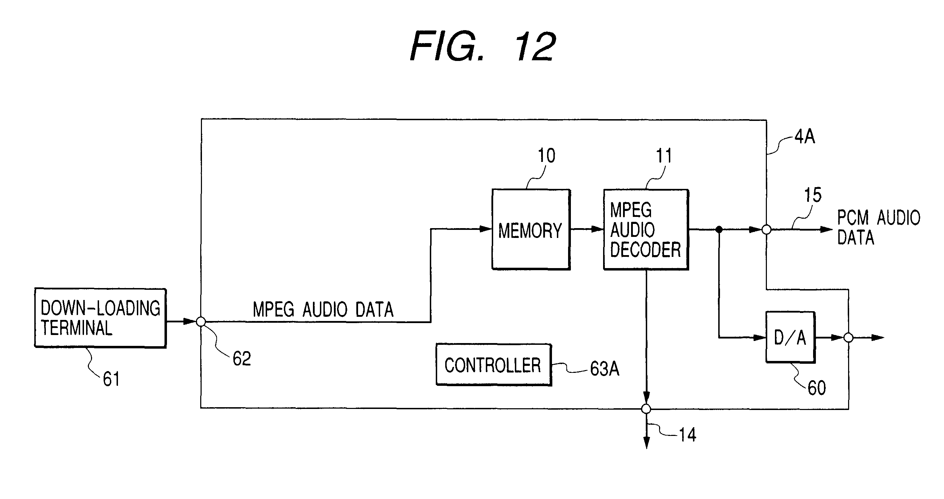

Fig. 12 shows a digital audio unit 4A, which is derived from the digital audio unit 1 of Fig. 1 and further provided with a D/A converter 60 for converting the PCM audio data 15 into an analog signal and an interface terminal 62 for introducing MPEG audio data from a down-loading terminal unit 61, which implements down-loading of MPEG audio data via a network such as the Internet, to the memory 10. A controller 63A implements the internal control of the digital audio unit 4A.

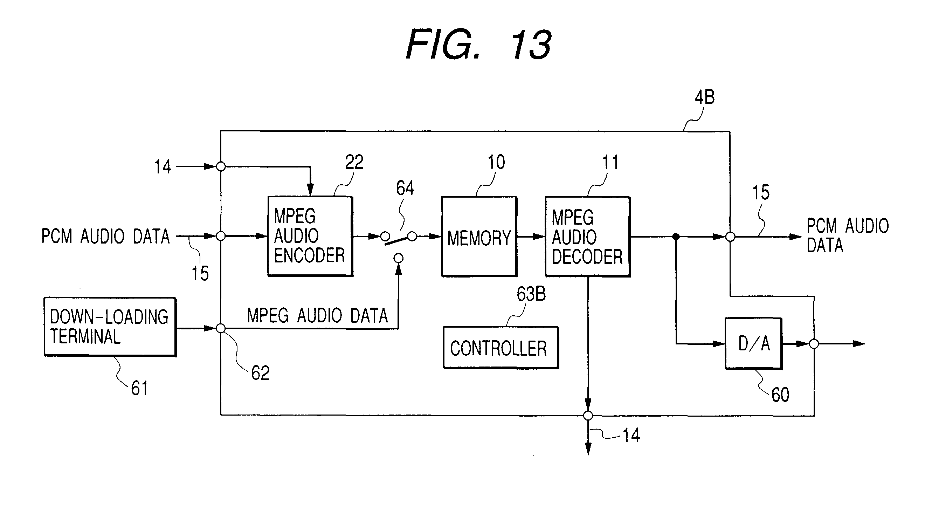

Fig. 13 shows a digital audio unit 4B, which is derived from the digital audio unit 4A of Fig. 12 and further provided with an MPEG audio encoder 22 which enables the reception of the PCM audio data 15 and coding parameters 14, so that the output of the MPEG audio encoder 22 or the input audio data from the terminal 62 is stored in the memory 10 by being selected by a switch 64. A controller 63B implements the internal control of the digital audio unit 4B, e.g., it operates the switch 64 depending on the operational mode specified by an external signal. The digital audio unit 4B of Fig. 13 has both functions of the units 1 and 2 shown in Fig. 1.

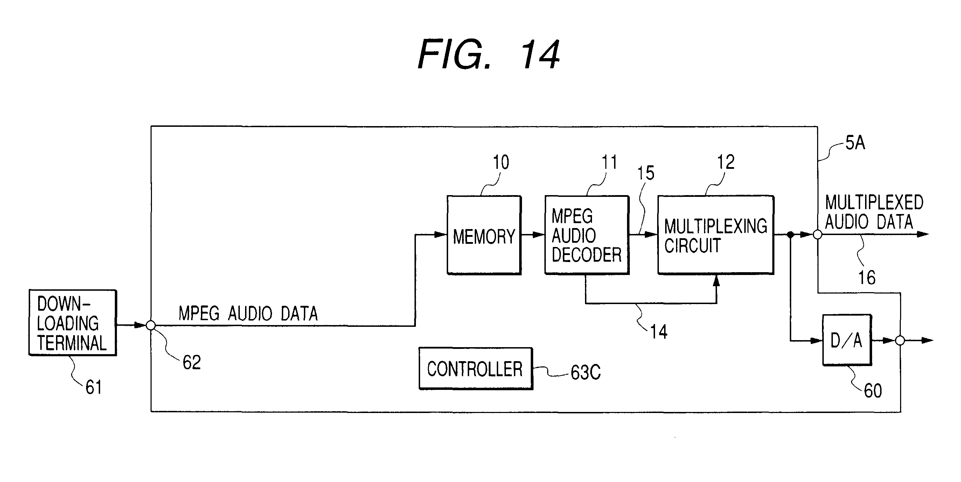

Fig. 14 shows a digital audio unit 5A, which is derived from the digital audio unit 1A of Fig. 6 and further provided with a D/A converter 60 for converting the PCM audio data 15, with the coding parameters 14 being multiplexed thereto, into an analog signal and an interface terminal 62 for introducing MPEG audio data from a down-loading terminal unit 61. A controller 63C implements the internal control of the digital audio unit 5A.

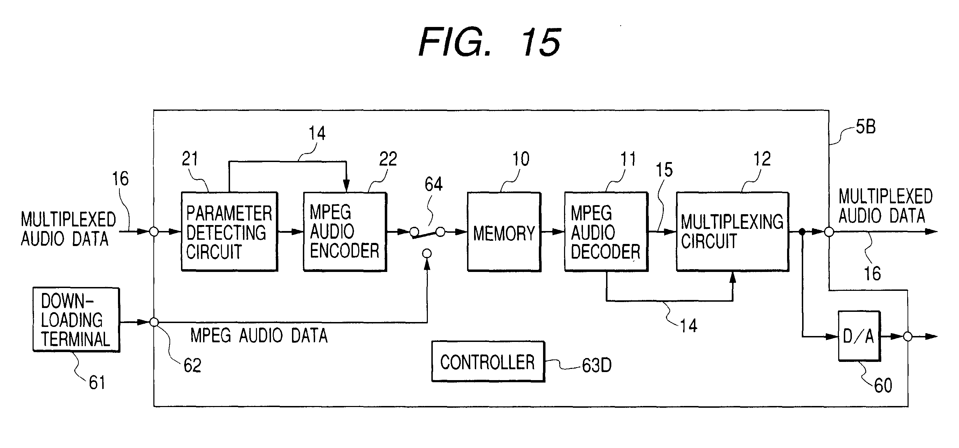

Fig. 15 shows a digital audio unit 5B, which is derived from the digital audio unit 5A of Fig. 14 and further provided with a parameter detecting circuit 21 and an MPEG audio encoder 22. The parameter detecting circuit 21, which receives the PCM audio data 15, with the coding parameters 14 being multiplexed thereto, separates the input multiplexed audio data 16 into the PCM audio data 15 and coding parameters 14. The MPEG audio encoder 22 encodes the separated PCM audio data 15 by using the coding parameters 14. The output of the MPEG audio encoder 22 or the input audio data from the terminal 62 is stored in the memory 10 by being selected by a switch 64. A controller 63D implements the internal control of the digital audio unit 5B. The digital audio unit 5B of Fig. 15 has both functions of the units 1A and 2A shown in Fig. 6.

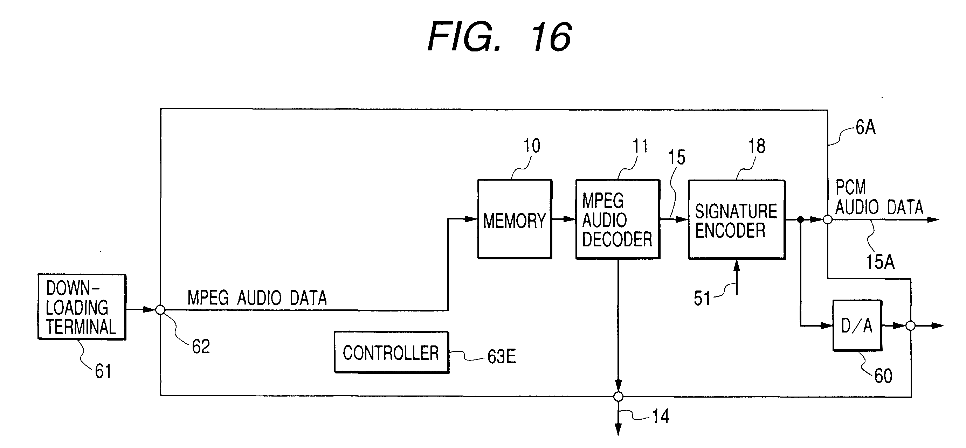

Fig. 16 shows a digital audio unit 6A, which is derived from the digital audio unit 1B of Fig. 9 and further provided with a D/A converter 60 for converting the PCM audio data 15A, with the signature information 51 being embedded therein, into an analog signal and an interface terminal 62 for introducing MPEG audio data from a down-loading terminal unit 61. A controller 63E implements the internal control of the digital audio unit 6A.

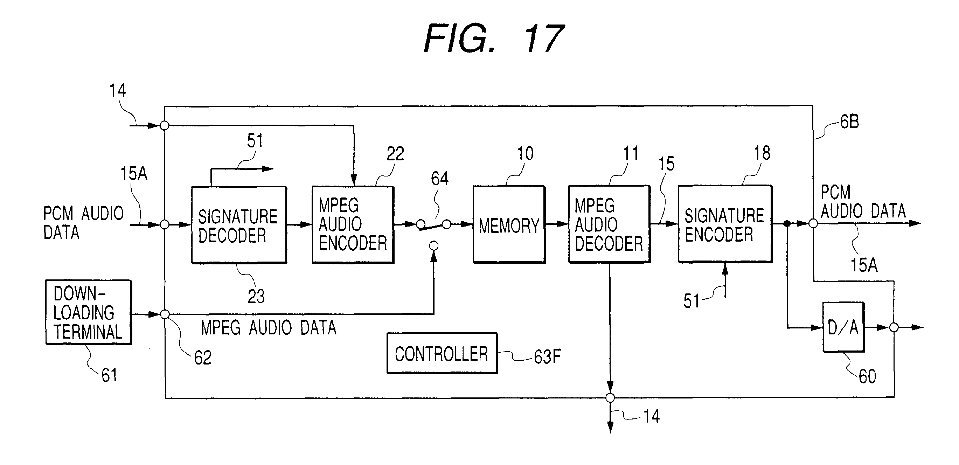

Fig. 17 shows a digital audio unit 6B, which is derived from the digital audio unit 6A of Fig. 16 and further provided with a signature decoder 23 and an MPEG audio encoder 22. The signature decoder 23, which receives the PCM audio data 15A, with the signature information being embedded therein, separates the input audio data 15A into the PCM audio data 15 and signature information 51. The MPEG audio encoder 22 encodes the separated PCM audio data 15 by using the coding parameters 14. The output of the MPEG audio encoder 22 or input audio data from the terminal 62 is stored in the memory 10 by being selected by a switch 64. A controller 63F implements the internal control of the digital audio unit 6B. The digital audio unit 6B of Fig. 17 has both functions of the units 1B and 2B shown in Fig. 9.

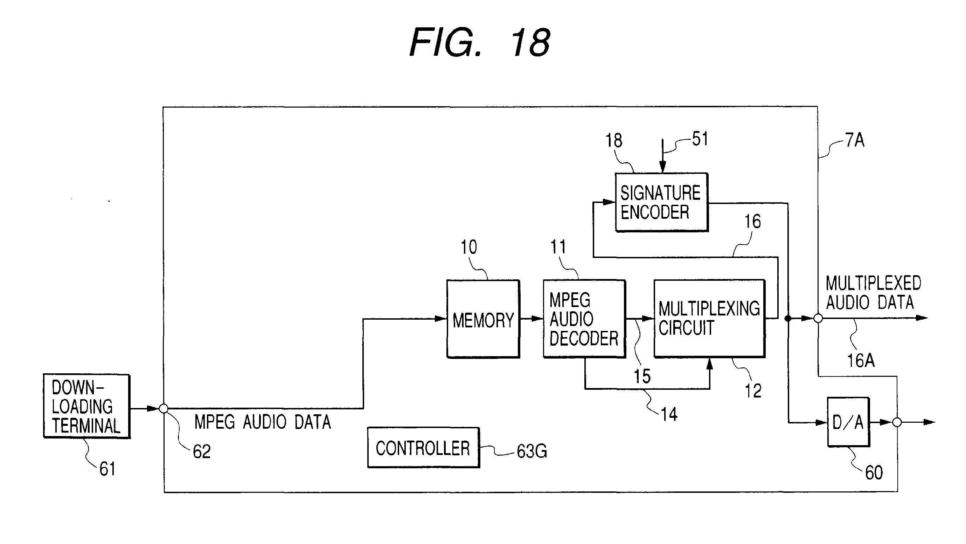

Fig. 18 shows a digital audio unit 7A, which is derived from the digital audio unit 1C of Fig. 10 and further provided with a D/A converter 60 for converting the PCM audio data 16A, with the signature information 51 being embedded therein, into an analog signal and an interface terminal 62 for introducing MPEG audio data from a down-loading terminal unit 61. A controller 63G implements the internal control of the digital audio unit 7A.

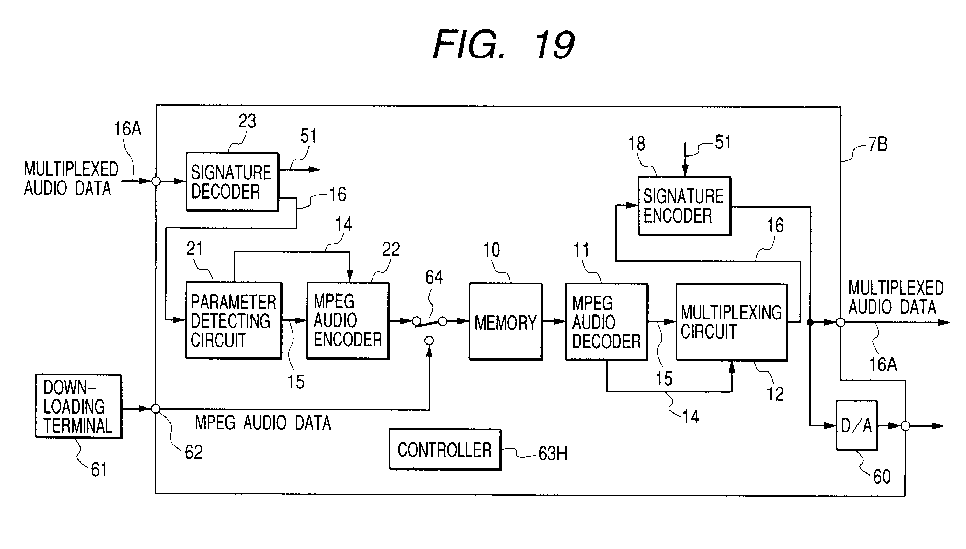

Fig. 19 shows a digital audio unit 7B, which is derived from the digital audio unit 6A of Fig. 18 and further provided with a signature decoder 23, a parameter detecting circuit 21 and an MPEG audio encoder 22. The signature decoder 23, which receives the audio data 16A, with the coding parameters being multiplexed thereto and the signature information being embedded therein, separates the input audio data 16A into the PCM audio data 16, with the coding parameters being multiplexed thereto, and the signature information 51. The parameter detecting circuit 21 separates the multiplexed audio data 16 into the PCM audio data 15 and coding parameters 14. The MPEG audio encoder 22 encodes the separated PCM audio data 15 by using the coding parameters 14. The output of the MPEG audio encoder 22 or input audio data from the terminal 62 is stored in the memory 10 by being selected by a switch 64. A controller 63H implements the internal control of the digital audio unit 7B. The digital audio unit 7B of Fig. 19 has both functions of the units 1C and 2C shown in Fig. 10.

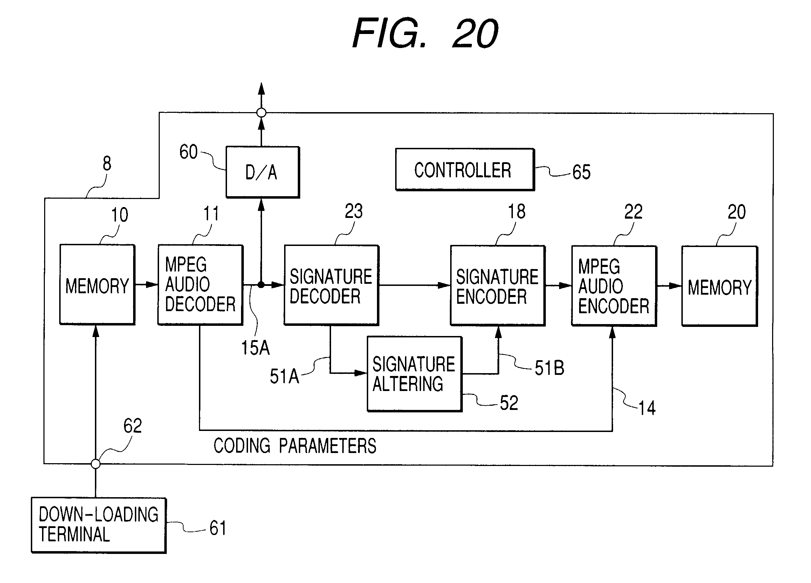

Fig. 20 shows a digital audio unit 8, which is derived from the digital audio unit 3 of Fig. 11 and further provided with a D/A converter 60 for converting the PCM audio data 15 released by the MPEG audio decoder 11 into an analog signal and an interface terminal 62 for introducing MPEG audio data from a down-loading terminal unit 61. A controller 65 implements the internal control of the digital audio unit 8.

Although the present invention has been explained specifically in connection with the embodiments, the present invention is not confined to these embodiments, but various alterations are obviously possible without departing from the essence of the invention.

For example, the memories 10 and 20 can be memory devices fixed on the circuit boards of the digital audio units, or can be memory cards which are put in and out of the units. In the latter case, the memory cards can be PC flash memory cards, compact flash memory cards, or multi-media cards. In case the memories 10 and 20 are non-volatile memories, they are not confined to be flash memories, but can be ferrodielectric memories or SRAMs having backup power sources.

The digital audio units shown in Fig. 1, Fig. 6, Fig. 9 and Fig. 11 include their own controllers, although these are not shown. For example, in case the MPEG audio decoder 11 and multiplexing circuit 12 of Fig. 6 are formed of a CPU, DSP and operation programs, the controller can be formed of the CPU and an operation program. The controllers shown in Fig. 12 through Fig. 20 can also be formed of CPUs and operation programs.

The coding parameters include at least information indicative of frame borders of digital audio data. Other coding parameters, which depend on the encoding scheme, can be for example the bit allotment information described previously in the case of using the encoding scheme of MPEG layer-2.

The encoding scheme for digital audio data is not confined to the MPEG audio, but it can obviously be other existing compressing scheme or a counterpart which will be available in the future. Audio data include vocal information obviously.

The effectiveness achieved by the present invention is briefed as follows.

Digital audio data which is decoded once is re-encoded by use of the same coding parameters as those used for coding the original digital audio data, and the decay of sound quality at re-encoding can be alleviated. Specifically, using the coding parameters which have been used for original coding reduces coding errors, thereby alleviating the decay of sound quality. Particularly, encoding at the same positions of frame partition as those of original coding readily achieves the same result of high-grade or highly optimized coding, and the reduction of coding errors can be expected.

In case, as in the case of the MPEG audio, the coded digital audio data is produced based on sub-band encoding for the audio data which is segmented into frames of a certain length, determination of bit allotment information for each sub-band in accordance with a psychological audition model, quantization of each sub-band in accordance with the bit allotment information thereby to form sub-band waveform data, it is possible by having the bit allotment information included in the coding parameters to use at re-encoding the same coding parameters as the original ones without the need of having the same bit allotting algorithm as of original coding, and, in addition, it is possible to eliminate the computation for obtaining coding parameters.

Since the coding parameter determination takes up a large part of the encoding process, the elimination of this process achieves the reduction of computation volume. At the time of re-encoding, the computation for obtaining coding parameters is not needed, and consequently the reduction of computation volume at re-encoding and the speed-up of the re-encoding process can be accomplished.

Also in the case of altering or adding electronic signature information for digital audio data which is coded, with electronic signature information being embedded therein, it is readily possible to prevent or alleviate the decay of sound quality.

## Claims

1. A digital audio system including:
an audio decoder for decoding coded digital audio data which is coded by being segmented into frames,
said audio decoder being capable of outputting digital audio data, which results from decoding of the coded digital audio data, and coding parameters which include at least information indicative of positions of frame partition of the digital audio data.

2. A digital audio system including:
an audio decoder for decoding coded digital audio data which is coded by being segmented into frames; and
an audio encoder for encoding digital audio data,
said audio encoder receiving the decoded digital audio data and coding parameters which include at least information indicative of positions of frame partition of the digital audio data and being capable of encoding the received digital audio data by using the coding parameters to form coded digital audio data.

3. A digital audio system including:
an audio decoder for decoding coded digital audio data which is coded by being segmented into frames;
an audio encoder for encoding digital audio data; and
a memory,
said audio decoder being capable of releasing digital audio data, which results from decoding of the coded digital audio data, and coding parameters which include at least information indicative of positions of frame partition of the digital audio data.
said audio encoder receiving the digital audio data and the coding parameters and being capable of encoding the received digital audio data by using the coding parameters and releasing the encoded digital audio data,
said memory being capable of storing the encoded digital audio data released by said audio encoder.

4. A digital audio system according to claim 3 further including a multiplexing circuit for multiplexing the decoded digital audio data and coding parameters released by said audio decoder and releasing the multiplexed digital audio data.

5. A digital audio system according to claim 4 further including a detection circuit for extracting the coding parameters from the multiplexed digital audio data and feeding to said audio encoder.

6. A digital audio system according to claim 1 further including a signature encoder for embedding electronic signature information in the digital audio data released by said audio decoder.

7. A digital audio system according to claim 2 further including a signature decoder for extracting electronic signature information embedded in the input digital audio data.

8. A digital audio system including:
an audio decoder for decoding coded digital audio data which is coded by being segmented into frames;
a signature decoder for extracting electronic signature information embedded in the digital audio data released by said audio decoder;
a data processing circuit for altering the extracted electronic signature information;
a signature encoder for embedding the electronic signature information altered by said data processing circuit in the digital audio data and releasing the resulting digital audio data; and
an audio encoder for encoding the digital audio data supplied through said signature encoder,
said audio decoder being capable of releasing digital audio data, which results from decoding of the coded digital audio data, and coding parameters which include at least information indicative of positions of frame partition of the digital audio data,
said audio encoder being capable of encoding the digital audio data by using the coding parameters released by said audio encoder.

9. A digital audio system according to claim 1, wherein said digital audio data comprises PCM data and said coded digital audio data comprises MPEG audio data including a header, bit allotment information for the allotment of bits to each sub-band in accordance with an audition model, and sub-band waveform data resulting from quantization of each sub-band in accordance with the bit allotment information.

10. A digital audio system according to claim 9, wherein said coding parameters include information, which indicates position of frame partition created based on the header, and the bit allotment information.
